# EUROPEAN PATENT SPECIFICATION

(11) **EP 2 058 198 B1**
(45) Date of publication and mention of the grant of the patent: **22.12.2010**
(21) Application number: 08704217.2
(22) Date of filing: 24.01.2008
(51) Int. Cl.: B60W 10/06, B01D 53/86, B01D 53/94, B60K 6/445, B60W 20/00, F01N 3/08, F01N 3/20, F01N 3/24, F01N 3/28, F02D 29/02, F02D 43/00, F02D 45/00

(54) **Vehicle comprising an exhaust purification device for a compression ignition type internal combustion engine**
Fahrzeug umfassend einer Abgasreinigungsvorrichtung für einen kompressionszündungs-verbrennungsmotors
Véhicule comprenant un épurateur d'échappement pour un moteur à combustion interne à allumage par compression

(30) Priority: 26.01.2007 JP 2007016196
(43) Date of publication of application: 13.05.2009
(73) Proprietor: Toyota Jidosha Kabushiki Kaisha, Toyota-shi Aichi 471-8571 (JP)
(72) Inventor: YOSHIDA, Kohei, Toyota-shi Aichi 471-8571 (JP); NISHIOKA, Hiromasa, Toyota-shi Aichi 471-8571 (JP); HAYASHI, Kotaro, Toyota-shi Aichi 471-8571 (JP); ASANUMA, Takamitsu, Toyota-shi Aichi 471-8571 (JP); HIROTA, Shinya, Toyota-shi Aichi 471-8571 (JP); OTSUKI, Hiroshi, Toyota-shi Aichi 471-8571 (JP)
(74) Representative: Kuhnen & Wacker
(86) International application number: PCT/JP2008/051464
(87) International publication number: WO 2008/091019

(56) References cited:
- EP-A- 1 195 510
- WO-A1-99/47801
- JP-A- 09 072 229
- JP-A- 2005 133 610

## Description

### TECHNICAL FIELD

The present invention relates to a vehicle including an exhaust purification device for a compression ignition type internal combustion engine.

### BACKGROUND ART

Known in the art is an internal combustion engine arranging in an engine exhaust passage an NOₓ storage catalyst storing NOₓ contained in exhaust gas when the air-fuel ratio of the inflowing exhaust gas is lean and releasing the stored NOₓ when the air-fuel ratio of the inflowing exhaust gas becomes a stoichiometric air-fuel ratio or rich. In this internal combustion engine, NOₓ formed when burning fuel under a lean air-fuel ratio is stored in the NOₓ storage catalyst. On the other hand, as the NOₓ storage catalyst approaches saturation of the NOₓ storage ability, the air-fuel ratio of the exhaust gas is temporarily made rich, whereby NOₓ is released from the NOₓ storage catalyst and reduced.

However, fuel and lubrication oil contain sulfur. Therefore, the exhaust gas also contains SOₓ. This SOₓ is stored together with the NOₓ in the NOₓ storage catalyst. This SOₓ is not released from the NOₓ storage catalyst by just making the exhaust gas a rich air-fuel ratio. Therefore, the amount of SOₓ stored in the NOₓ storage catalyst gradually increases. As a result, the storable NOₓ amount ends up gradually decreasing.

However, in this case, the SOₓ stored in the NOₓ storage catalyst is gradually released from the NOₓ storage catalyst if raising the temperature of the NOₓ storage catalyst and making the exhaust gas flowing into the NOₓ storage catalyst a rich air-fuel ratio. However, in this case, during the release of SOₓ, if the NOₓ storage catalyst falls in temperature, the SOₓ release action ends up stopping. If the SOₓ release action ends up stopping once, the SOₓ release action is not performed until the NOₓ storage catalyst again rises in temperature. Therefore, if the NOₓ storage catalyst falls in temperature during release of SOₓ, getting the SOₓ released will require a long time.

Therefore, there is known a hybrid diesel engine provided with an electric motor, stopping the operation of the engine when the exhaust temperature falls so as to suppress the flow of low temperature exhaust gas into the NOₓ storage catalyst and the fall of the NOₓ storage catalyst in temperature, and using the electric motor at that time to drive the vehicle (for example, see Japanese Patent Publication (A) No. 2005-133563). In this diesel engine, when the NOₓ storage catalyst falls in temperature, the NOₓ storage catalyst is not raised in temperature to continue the SOₓ release action, but it is allowed to stop the SOₓ release action by the drop in temperature of the NOₓ storage catalyst.

As opposed to this, there is known an internal combustion engine arranging an SOₓ trap catalyst able to trap SOₓ in the exhaust gas in the engine exhaust passage upstream of the NOₓ storage catalyst (see Japanese Patent Publication (A) No. 2005-133610). In this internal combustion engine, the SOₓ contained in the exhaust gas is trapped by the SOₓ trap catalyst, therefore the flow of SOₓ into the NOₓ storage catalyst is inhibited.

In this regard, when using such an SOₓ trap catalyst, if the SOₓ trap rate falls and SOₓ flows into the NOₓ storage catalyst, that is, if the action of the SOₓ trap catalyst in blocking the flow of SOₓ into the NOₓ storage catalyst is stopped, there is no longer any meaning to arranging the SOₓ trap catalyst upstream of the NOₓ storage catalyst. Therefore, when using such an SOₓ trap catalyst, it becomes necessary to continue to maintain the SOₓ trap rate at a high SOₓ trap rate without the action of blocking the inflow of SOₓ into the NOₓ storage catalyst stopping.

In this regard, the SOₓ trap rate changes along with a change in the engine operating state. If the SOₓ trap catalyst falls in temperature or the exhaust gas flowing through the SOₓ trap catalyst becomes higher in spatial velocity, the SOₓ trap rate will fall. At this time, it becomes necessary to make the SOₓ trap rate rise to continue to maintain the SOₓ trap rate at a high SOₓ trap rate, but no consideration is being given to this at all at present.

### DISCLOSURE OF THE INVENTION

An object of the present invention is to provide a vehicle including an exhaust purification device for an internal combustion engine able to maintain the SOₓ trap rate at a high SOₓ trap rate.

This object is solved with the vehicle according to claim 1.

According to said claim 1 of the present invention, there is provided a vehicle, comprising a compression ignition type internal combustion engine, an electric power device and an exhaust purification device for said internal combustion engine. Said exhaust purification device arranging, in an engine exhaust passage, an SOₓ trap catalyst able to trap SOₓ contained in exhaust gas, and, in the exhaust passage downstream of the SOₓ trap catalyst, an NOₓ storage catalyst storing NOₓ contained in the exhaust gas when the air-fuel ratio of an inflowing exhaust gas is lean and releasing stored NOₓ when the air-fuel ratio of the inflowing exhaust gas becomes a stoichiometric air-fuel ratio or rich. Said electric power device being able to generate vehicle drive power separate from the vehicle drive power from the engine and able to generate electric power from the engine, wherein the vehicle drive power from the engine and the vehicle drive power from the electric power device are adjusted so that a SOₓ trap rate of the SOₓ trap catalyst is maintained at a predetermined high SOₓ trap rate.

### BRIEF DESCRIPTION OF THE DRAWINGS

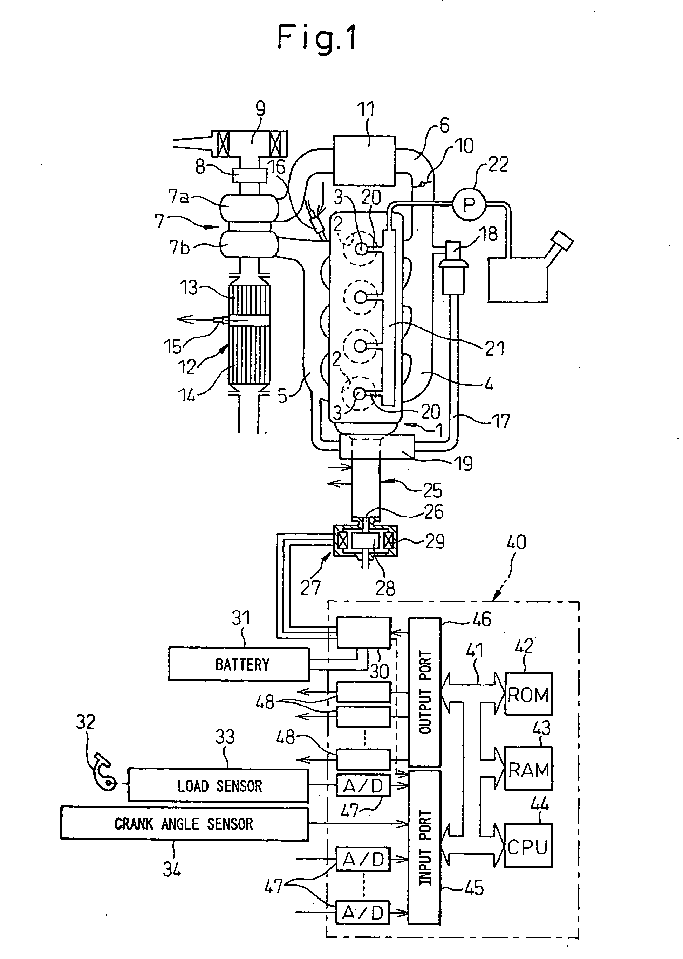

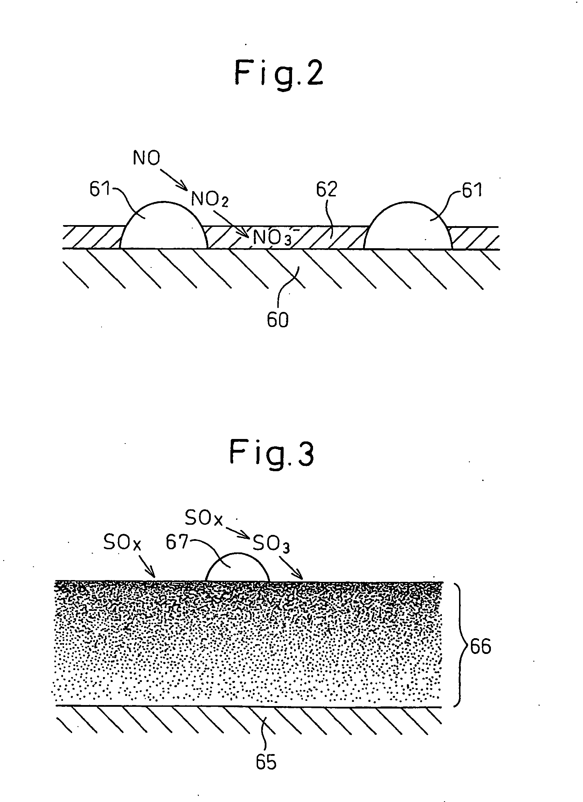

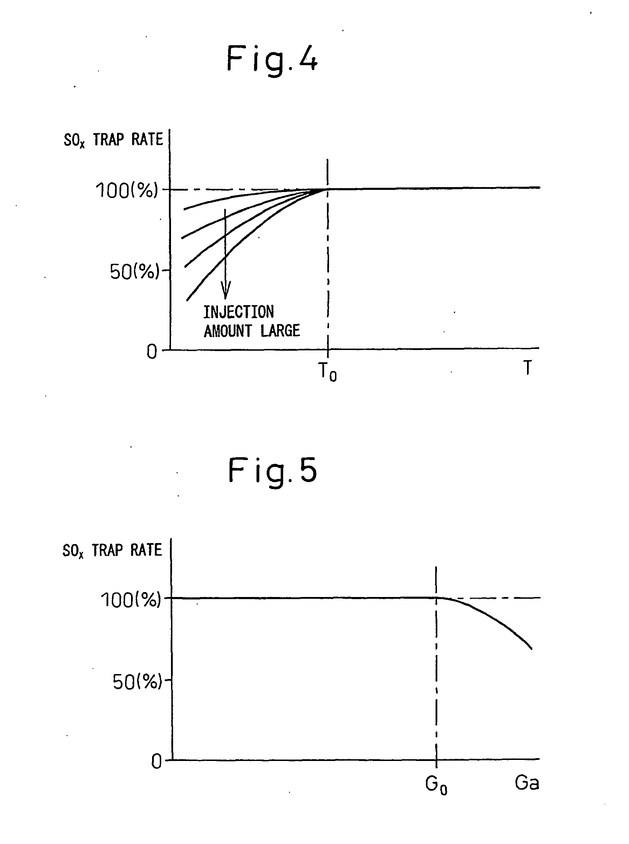

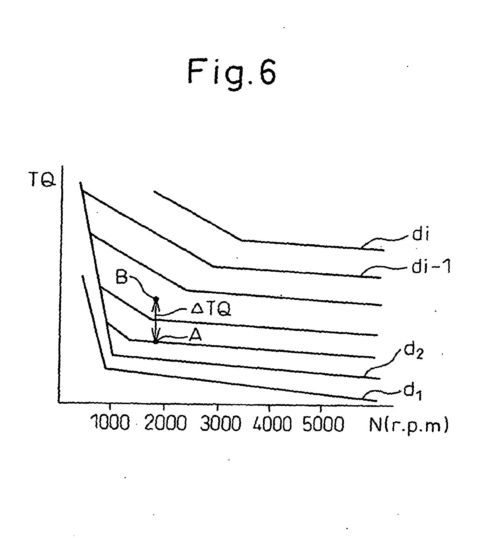

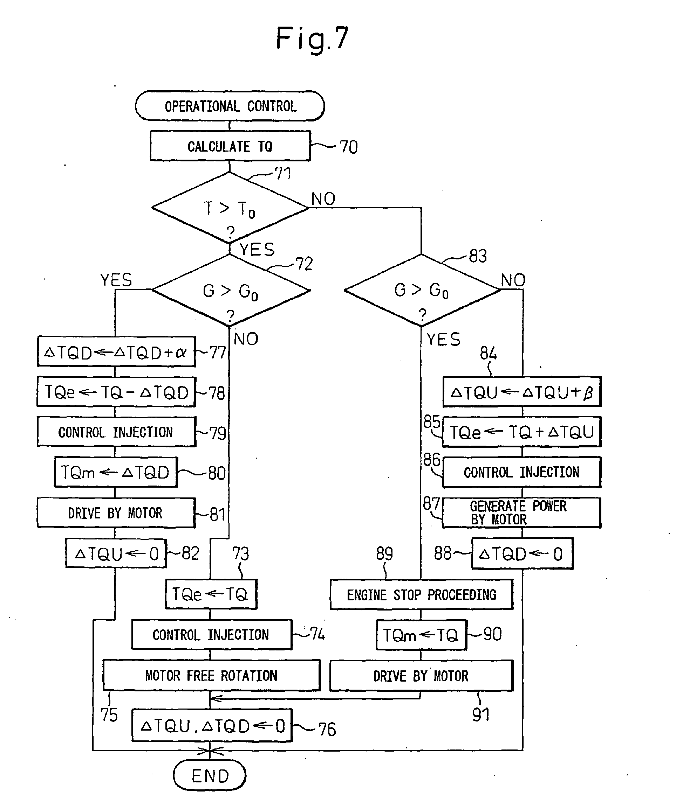

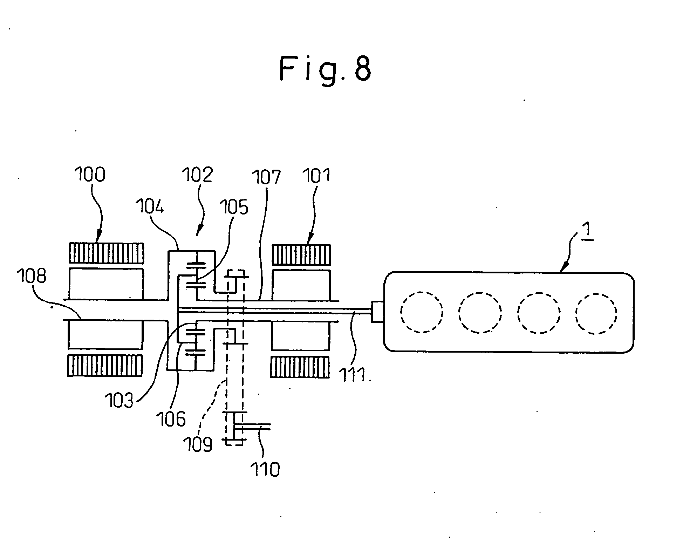

FIG. 1 is an overview of a compression ignition type internal combustion engine; FIG. 2 is a cross-sectional view of the surface part of a substrate of an NOₓ purification catalyst; FIG. 3 is a cross-sectional view of the surface part of a substrate of an SOₓ trap catalyst; FIG. 4 is a view showing the SOₓ trap rate, FIG. 5 is a view showing the SOₓ trap rate; FIG. 6 is a view showing the output torque of an internal combustion engine; FIG. 7 is a flowchart for operational control; and FIG. 8 is a view showing another embodiment of an electric power device.

### BEST MODE FOR CARRYING OUT THE INVENTION

FIG. 1 is an overview of a compression ignition type internal combustion engine.

Referring to FIG. 1, 1 indicates an engine body, 2 a combustion chamber of each cylinder, 3 an electronically controlled fuel injector injecting fuel into each combustion chamber 2, 4 an intake manifold, and 5 an exhaust manifold. The intake manifold 4 is connected through an intake duct 6 to a compressor 7a of an exhaust turbocharger 7, while an inlet of the compressor 7a is connected through an intake air detector 8 to an air cleaner 9. Inside the intake duct 6, a throttle valve 10 driven by the step motor is arranged. Further, around the intake duct 6, a cooling device 11 for cooling the intake air flowing through the intake duct 6 is arranged. In the embodiment shown in FIG. 1, the engine cooling water is led into the cooling device 11 where the engine cooling water is used to cool the intake air.

On the other hand, the exhaust manifold 5 is connected to an inlet of an exhaust turbine 7b of the exhaust turbocharger 7. The outlet of the exhaust turbine 7b is connected to an inlet of a catalyst converter 12. Inside the catalyst converter 12, an SOₓ trap catalyst 13 and NOₓ storage catalyst 14 are arranged in order from the upstream side. Inside the catalyst converter 12 between the SOₓ trap catalyst 13 and the NOₓ storage catalyst 14, a temperature sensor 15 for detecting the temperature of the exhaust gas flowing out from the SOₓ trap catalyst 13 is provided. In the embodiment according to the present invention, the temperature of the SOₓ trap catalyst 13 is estimated from the detection value of this temperature sensor 15. Further, inside the exhaust manifold 5, a reducing agent feed valve 16 for feeding a reducing agent comprised of for example a hydrocarbon into the exhaust manifold 5 is attached.

The exhaust manifold 5 and intake manifold 4 are connected to each other through an exhaust gas recirculation (hereinafter referred to as "EGR") passage 17. Inside the EGR passage 17, an electronic control type EGR control valve 18 is arranged. Further, around the EGR passage 17, a cooling device 19 for cooling the EGR gas flowing through the EGR passage 17 is arranged. In the embodiment shown in FIG. 1, engine cooling water is led to the cooling device 19 where the engine cooling water cools the EGR gas. On the other hand, each fuel injector 3 is connected through a fuel tube 20 to a common rail 21. This common rail 21 is fed with fuel from an electronically controlled variable discharge fuel pump 22. The fuel fed into the common rail 21 is fed through each fuel tube 20 into a fuel injector 3.

On the other hand, in the embodiment shown in FIG. 1, a transmission 25 is coupled with the output shaft of the engine, while an electric motor 27 is coupled with the output shaft 26 of the transmission 25. In this case, as the transmission 25, it is possible to use an ordinary gear-type automatic transmission provided with a torque converter, a manual transmission, a gear-type automatic transmission of a type designed to automatically perform the clutch operation and gear shift operation in a manual transmission provided with a clutch, etc.

Further, the electric motor 27 coupled with the output shaft 26 of the transmission 25 comprises an electric power device able to generate vehicle drive power separate from the vehicle drive power from the engine and able to generate electric power by the engine. In this embodiment shown in FIG. 1, this electric motor 27 comprises an AC synchronous motor provided with a rotor 28 attached on an output shaft 26 of the transmission 25 and attaching a plurality of permanent magnets to the outer circumference and a stator 29 provided with an excitation coil forming a rotary magnetic field. The excitation coil of the stator 29 is connected to a motor drive control circuit 30, while this motor drive control circuit 30 is connected to a battery 31 generating a DC high voltage.

The electronic control unit 40 is comprised of a digital computer and is provided with a ROM (read only memory) 42, RAM (random access memory) 43, CPU (microprocessor) 44, input port 45, and output port 46 which are connect to each other by a bi-directional bus 41. The output signals of the intake air detector 8 and the temperature sensor 15 are input through corresponding AD converters 47 to an input port 45. Further, the input port 45 receives as input various signals showing the gear of the transmission 25, the rotational speed of the output shaft 26, etc.

On the other hand, the accelerator pedal 32 is connected to a load sensor 33 generating an output voltage proportional to the amount of depression L of an accelerator pedal 32. The output voltage of the load sensor 33 is input through a corresponding AD converter 47 to the input port 45. Further, the input port 45 is connected to a crank angle sensor 34 generating an output pulse each time the crankshaft rotates by for example 10°. On the other hand, the output port 46 is connected through a corresponding drive circuit 48 to the fuel injector 3, the reducing agent feed valve 16, EGR control valve 18, transmission 25, motor drive control circuit 30, etc.

The feed of electric power from the electric motor 27 to the excitation coil of the stator 29 is normally stopped. At this time, the rotor 28 rotates together with the output shaft 26 of the transmission 25. On the other hand, when driving the electric motor 27, the DC high voltage of the battery 31 is converted at the motor drive control circuit 30 to a three-phase alternating current of a frequency of fm and a current value of Im, and this three-phase alternating current is fed to the excitation coil of the stator 29. This frequency fm is the frequency required for making the rotating magnetic field generated by the excitation coil rotate in synchronization with the rotation of the rotor 28. This frequency fm is calculated by a CPU 44 based on the rotational speed of the output shaft 26. At the motor drive control circuit 30, this frequency fm is made the frequency of the three-phase alternating current.

On the other hand, the output torque of the electric motor 27 is substantially proportional to the current value Im of the three-phase alternating current. This current value Im is calculated at the CPU 44 based on the required output torque of the electric motor 27. In the motor drive control circuit 30, this current value Im is made the current value of the three-phase alternating current.

Further, if driving the electric motor 27 by external force, the electric motor 27 operates as a generator. At this time, the generated electric power is recovered by the battery 31. Whether to use external force to drive the electric motor 27 is judged by the CPU 44. When it is judged that external force should be used to drive the electric motor 27, a motor control circuit 3 is used to control the electric motor 27 so that the generated electric power is recovered at the battery 31.

Next, the NOₓ storage catalyst 14 shown in FIG. 1 will be explained. This NOₓ storage catalyst 14 is comprised of a substrate on which for example for example a catalyst carrier comprised of alumina is carried. FIG. 2 illustrates the cross-section of the surface part of this catalyst carrier 60. As shown in FIG. 2, the catalyst carrier 60 carries a precious metal catalyst 61 diffused on the surface. Further, the catalyst carrier 60 is formed with a layer of an NOₓ absorbent 62 on its surface.

In the embodiment according to the present invention, as the precious metal catalyst 61, platinum Pt is used. As the ingredient forming the NOₓ absorbent 62, for example, at least one element selected from potassium K, sodium Na, cesium Cs, and other such alkali metals, barium Ba, calcium Ca, and other such alkali earths, lanthanum La, yttrium Y, and other rare earths is used.

If the ratio of the air and fuel (hydrocarbons) fed into the engine intake passage, combustion chamber 2, and exhaust passage upstream of the NOₓ storage catalyst 14 is called the "air-fuel ratio of the exhaust gas", an NOₓ absorption and release action such that the NOₓ absorbent 62 absorbs the NOₓ when the air-fuel ratio of the exhaust gas is lean and releases the absorbed NOₓ when the oxygen concentration in the exhaust gas falls is performed.

That is, explaining this taking as an example the case of using barium Ba as the ingredient forming the NOₓ absorbent 62, when the air-fuel ratio of the exhaust gas is lean, that is, the oxygen concentration in the exhaust gas is high, the NO contained in the exhaust gas, as shown in FIG. 2, is oxidized on the platinum Pt 61 to become NO₂, next is absorbed in the NOₓ absorbent 62 and bonds with the barium oxide BaO to diffuse in the form of nitrate ions NO₃⁻ into the NOₓ absorbent 52. In this way, NOₓ is absorbed in the NOₓ absorbent 62. So long as the oxygen concentration in the exhaust gas is high, NO₂ is formed on the platinum Pt 61. So long as the NOₓ absorbent 62 is not saturated in NOₓ absorption ability, NO₂ is absorbed in the NOₓ absorbent 62 and nitrate ions NO₃⁻ are formed.

As opposed to this, for example if the reducing agent feed valve 16 feeds the reducing agent to make the exhaust gas a rich air-fuel ratio or stoichiometric air-fuel ratio, the oxygen concentration in the exhaust gas falls, so the reaction proceeds in the reverse direction (NO₃⁻→NO₂) , therefore the nitrate ions NO₃ in the NOₓ absorbent 62 are released in the form of NO₂ from the NOₓ absorbent 62. Next, the released NOₓ is reduced by the unburned HC and CO contained in the exhaust gas.

In this way, when the air-fuel ratio of the exhaust gas is lean, that is, when burning the fuel under a lean air-fuel ratio, the NOₓ in the exhaust gas is absorbed in the NOₓ absorbent 62. However, when the fuel continues to be burned under a lean air-fuel ratio, the NOₓ absorbent 62 eventually ends up becoming saturated in NOₓ absorption ability, therefore the NOₓ absorbent 62 ends up becoming unable to absorb the NOₓ. Therefore, in this embodiment of the present invention, before the NOₓ absorbent 62 becomes saturated in absorption ability, the reducing agent is fed from the reducing agent feed valve 16 to make the exhaust gas temporarily rich air-fuel ratio and thereby make the NOₓ absorbent 62 release the NOₓ.

On the other hand, the exhaust gas contains SOₓ, that is, SO₂. If this SO₂ flows into the NOₓ storage catalyst 62, this SO₂ is oxidized on the platinum Pt 61 and becomes SO₃. Next, this SO₃ is absorbed in the NOₓ absorbent 62, bonds with the barium oxide BaO, is diffused in the form of sulfate ions SO₄²⁻ in the NOₓ absorbent 62, and forms stable sulfate BaSO₄. However, the NOₓ absorbent 62 has a strong basicity, so this sulfate BaSO₄ is stable and hard to break down. If just making the exhaust gas rich air-fuel ratio, the sulfate BaSO₄ remains as is without breaking down. Therefore, in the NOₓ absorbent 62, the sulfate BaSO₄ increases along with the elapse of time, therefore the NOₓ amount which the NOₓ absorbent 62 can absorb falls along with the elapse of time.

In this regard, in this case, if making the air-fuel ratio of the exhaust gas flowing into the NOₓ storage catalyst 14 rich in the state where the temperature of the NOₓ storage catalyst 14 is made to rise to the SOₓ release temperature of 600°C or more, the NOₓ absorbent 62 releases SOₓ. However, in this case, the NOₓ absorbent 62 only releases a little SOₓ at a time. Therefore, to make the NOₓ absorbent 62 release all of the absorbed SOₓ, it is necessary to make the air-fuel ratio rich over a long time, therefore there is the problem that a large amount of fuel or reducing agent becomes necessary. Further, the SOₓ released from the SOₓ absorbent 62 is exhausted into the atmosphere. This is also not preferable.

Therefore, in an embodiment of the present invention, the SOₓ trap catalyst 13 is arranged upstream of the NOₓ storage catalyst 14 to trap the SOₓ contained in the exhaust gas by this SOₓ trap catalyst 13 and thereby prevent SOₓ from flowing into the NOₓ storage catalyst 14. Next this SOₓ trap catalyst 13 will be explained.

FIG. 3 illustrates the cross-section of the surface part of a substrate 65 of this SOₓ trap catalyst 13. As shown in FIG. 3, the substrate 65 is formed with a coat layer 66 on its surface. This coat layer 66 carries a precious metal catalyst 67 diffused on its surface. In the embodiment according to the present invention, as the precious metal catalyst 67, platinum is used. As the ingredient forming the coat layer 66, for example, at least one element selected from potassium K, sodium Na, cesium Cs, and other such alkali metals, barium Ba, calcium Ca, and other such alkali earths, lanthanum La, yttrium Y, and other rare earths is used. That is, the coat layer 66 of the SOₓ trap catalyst 13 exhibits a strong basicity.

Now, the SOₓ contained in the exhaust gas, that is, SO₂, is oxidized on the platinum Pt 67 as shown in FIG. 3, then is trapped in the coat layer 66. That is, the SO₂ diffuses in the form of sulfate ions SO₄²⁻ in the coat layer 66 to form a sulfate. Note that as explained above, the coat layer 66 exhibits a strong basicity. Therefore, as shown in FIG. 3, part of the SO₂ contained in the exhaust gas is directly trapped in the coat layer 66.

In FIG. 3, the shading in the coat layer 66 shows the concentration of the trapped SOₓ. As will be understood from FIG. 3, the SOₓ concentration in the coat layer 66 is highest near the surface of the coat layer 66. The further in, the lower it becomes. If the SOₓ concentration near the surface of the coat layer 66 increases, the surface of the coat layer 66 weakens in basicity and the SOₓ trap ability weakens. Here, if the ratio of the amount of the SOₓ trapped in the SOₓ trap catalyst 13 to the amount of the SOₓ in the exhaust gas is called the "SOₓ trap rate", if the basicity of the surface of the coat layer 66 is weakened, the SOₓ trap rate falls along with that.

Note that the SOₓ concentration near the surface of the coat layer 66 becomes higher after for example the engine is run over a long distance of about 50,000 km. Therefore, the SOₓ trap ability of the SOₓ trap catalyst 13 will not weaken over a long period. Note that when the SOₓ trap ability weakens, in the embodiment according to the present invention, the temperature of the SOₓ trap catalyst 13 is made to rise under a lean air-fuel ratio of the exhaust gas by temperature elevation control and thereby the SOₓ trap ability is restored.

That is, if making the SOₓ trap catalyst 13 rise in temperature under a lean air-fuel ratio of the exhaust gas, the SOₓ present concentrated near the surface of the coat layer 66 diffuses toward the deep part of the coat layer 66 so that the SOₓ concentration in the coat layer 66 becomes uniform. That is, the nitrate produced in the coat layer 66 changes from an unstable state where it concentrates near the surface of the coat layer 66 to the stable state where it diffuses uniformly in the coat layer 66 as a whole. If the SOₓ present near the surface of the coat layer 66 diffuses toward the deep part of the coat layer 66, the SOₓ concentration near the surface of the coat layer 66 falls, therefore when control for raising the temperature of the SOₓ trap catalyst 13 ends, the SOₓ trap ability is restored.

As explained above, the SOₓ trap catalyst 13 will not weaken in SOₓ trap ability over a long period of time. However, the SOₓ trap rate changes in accordance with the engine operating state. This change of the SOₓ trap rate is shown in FIG. 4 and FIG. 5.

FIG. 4 shows the relationship between the temperature T of the SOₓ trap catalyst 13 and the SOₓ trap rate. As shown in FIG. 4, when the temperature T of the SOₓ trap catalyst 13 is higher than a predetermined limit temperature To determined by the SOₓ trap catalyst 13, the SOₓ trap rate is substantially 100%. If the temperature T of the SOₓ trap catalyst 13 becomes lower than the limit temperature To, the platinum 67 weakens in activity, so the SOₓ trap rate falls. Further, the larger the amount of fuel injection, that is, the greater the amount of SOₓ included in the exhaust gas, the lower the SOₓ trap rate.

FIG. 5 shows the relationship between the amount of intake air Ga, that is, the spatial velocity of the exhaust gas flowing through the SOₓ trap catalyst 13, and the SOₓ trap rate. As shown in FIG. 5, when the amount of intake air Go is smaller than a predetermined limit amount of air Go determined by the SOₓ trap catalyst 13, the SOₓ trap rate is substantially 100%. If the amount of intake air G exceeds the limit amount of air Go, the spatial velocity of the exhaust gas flowing through the SOₓ trap catalyst 13 becomes higher, so the SOₓ trap rate falls.

If the SOₓ trap rate falls, the SOₓ passing through the SOₓ trap catalyst 13 flows into the NOₓ storage catalyst 14. If the SOₓ flows into the NOₓ storage catalyst 14 in this way, that is, if the action of the SOₓ trap catalyst 13 in blocking the inflow of SOₓ into the NOₓ storage catalyst 14 is stopped, there is no longer any meaning to arranging the SOₓ trap catalyst 13 upstream of the NOₓ storage catalyst 14. Therefore, when using the SOₓ trap catalyst 13, it becomes necessary to maintain the SOₓ trap rate at a high SOₓ trap rate without the action of blocking inflow of SOₓ to the NOₓ storage catalyst 14 stopping.

Therefore, in the present invention, the vehicle drive power from the engine and the vehicle drive power from the electric power device are adjusted so as to utilize the electric power device to maintain the SOₓ trap rate of the SOₓ trap catalyst 13 at a predetermined high SOₓ trap rate, for example substantially 100%.

That is, when the temperature T of the SOₓ trap catalyst 13 is lower than the limit temperature To, if increasing the vehicle drive power from the engine, the exhaust temperature rises and therefore the temperature T of the SOₓ trap catalyst 13 can be made higher than the limit temperature To. However, if at this time the amount of intake air Ga is lower than the limit amount of air Go, the SOₓ trap rate rises to the predetermined high SOₓ trap rate, but when the amount of intake air Ga is greater than the limit amount of air Go, the SOₓ trap rate cannot rise to the predetermined high SOₓ trap rate.

Therefore, in the embodiment according to the present invention, when the temperature T of the SOₓ trap catalyst 13 is less than the limit temperature To, the vehicle drive power from the engine and the vehicle drive power from the electric power device are adjusted in accordance with whether the SOₓ trap rate becomes a predetermined high SOₓ trap rate when increasing the output torque of the engine.

That is, specifically speaking, when increasing the output torque of the engine, when the SOₓ trap rate becomes a predetermined high SOₓ trap rate, the output torque of the engine is increased from the required torque. To explain this, FIG. 6 shows the relationship between the equivalent depression amounts d₁ to di of the accelerator pedal 32, the engine speed N, and the output torque of the engine TQ. Note that in FIG. 6, the amount of depression of the accelerator pedal 32 becomes greater from d₁ toward di. In FIG. 6, when the amount of depression of the accelerator pedal 32 and the engine speed N are determined, the output torque TQ at that time becomes the required torque.

That is, for example assume now the operating state shown by the point A in FIG. 6. At the time of such an operating state, the temperature T of the SOₓ trap catalyst 13 becomes less than the limit temperature To and at this time, if increasing the output torque of the engine, when the SOₓ trap rate becomes a predetermined high SOₓ trap rate, the output torque of the engine is gradually increased from the required torque shown by the point A of FIG. 6 to the output torque shown by for example the point B by ΔTQ. Due to this, the SOₓ trap rate is increased to substantially 100%.

Further, in this embodiment, when the output torque of the engine is made to increase by ΔTQ, the increase ΔTQ of the output torque is made to be consumed for the generation of electric power by the electric power device so that the vehicle drive power is not increased. That is, at this time, the electric power device is operated as a generator and the increase ΔTQ of the output torque is used for the action of the generator of generating power.

As opposed to this, the temperature T of the SOₓ trap catalyst 13 becomes less than the limit temperature To, and when the SOₓ trap rate will not become a predetermined high SOₓ trap rate even if increasing the output torque of the engine, that is, when the amount of intake air Ga is greater than the limit amount of air Go, SOₓ continues to flow into the NOₓ storage catalyst 14 even if increasing the output torque of the engine. Therefore, there is no longer any meaning in arranging the SOₓ trap catalyst 13 upstream of the NOₓ storage catalyst 14. Therefore, at this time, the engine is stopped and the vehicle is driven by the electric power device. That is, at this time, if the output torque of the engine is for example the output torque shown by the point A in FIG. 6, the electric power device is driven so as to generate the output torque shown by the point A.

In this way, in the embodiment according to the present invention, when the temperature T of the SOₓ trap catalyst 13 becomes less than the limit temperature To and the amount of intake air Ga is greater than the limit amount of air Go, the engine is stopped. Such an operating state mainly occurs at the time of engine warmup operation. Therefore, at the time of engine warmup operation, sometimes the engine is stopped.

On the other hand, in the embodiment according to the present invention, when the temperature T of the SOₓ trap catalyst 13 is higher than the limit temperature To, the vehicle is driven by the engine so long as the SOₓ trap rate does not drop due to a reason other then the drop of the temperature of the SOₓ trap catalyst 13. As opposed to this, when the temperature T of the SOₓ trap catalyst 13 is higher than the limit temperature To, when the amount of intake air Ga becomes greater than even the limit amount of air Go and the SOₓ trap rate falls, to lower the temperature T of the SOₓ trap catalyst 13, the output torque of the engine is decreased from the required torque. At this time, to prevent the drive power of the vehicle from changing, the decrease in the output torque is made up for by the vehicle drive power from the electric power device.

That is, for example, now assume the operating state shown by the point B in FIG. 6. At this time, if the temperature T of the SOₓ trap catalyst 13 is higher than the limit temperature To and the amount of intake air Ga becomes greater than the limit amount of air Go, the output torque of the engine is decreased from the required torque shown by the point B of FIG. 6 to for example the output torque shown by the point A gradually by ΔTQ and the decrease of this output torque is made up for by the drive power of the electric motor 27.

FIG. 7 shows the operational control routine. This routine is executed by interruption every constant time period.

Referring to FIG. 7, first, at step 70, the required torque TQ is calculated from the relationship shown in FIG. 6 based on the amounts of depression d₁ to di of the accelerator pedal 32 and the engine speed N. Next, at step 71, it is judged if the temperature T of the SOₓ trap catalyst 13 estimated by the temperature sensor 15 is higher than the limit temperature To. When T>To, the routine proceeds to step 72, where it is judged if the amount of intake air G detected by the intake air detector 8 is greater than the limit amount of air Go. When G≤Go, the routine proceeds to step 73.

As will be understood from FIG. 4 and FIG. 5, when T>To and G≤Go, the SOₓ trap rate becomes substantially 100%. Therefore, when the SOₓ trap rate is substantially 100%, it is learned that the routine proceeds to step 73. At step 73, the required torque TQ calculated at step 70 is made the final required torque of the engine. Next, at step 74, the fuel injection is controlled so as to give this final required torque. Next, at step 75, the electric motor 27 is set to a state where it can freely rotate. Next, at step 76, the torque correction values ΔṪQU, ΔTQD are cleared.

As opposed to this, when it is judged at step 72 that G>Go, to make the SOₓ trap rate rise to substantially 100%, the routine proceeds to step 77, where the output torque of the engine is gradually decreased. That is, first, at step 77, the torque decrease correction amount ΔTQD is increased by a constant value α. Next, at step 78, the required torque TQ calculated at step 70 is decreased by the torque decrease correction amount ΔTQD and the result is made the final required torque of the engine TQe (=TQ-ΔTQD). Next, at step 79, the fuel injection is controlled so as to obtain the final required torque TQe.

Next, at step 80, the torque decrease correction amount ΔTQD is made the output torque TQm of the electric motor 27 for driving the vehicle. Next, at step 81, the electric motor 27 is driven so as to generate the output torque TQm. Next, at step 82, the torque increase correction amount ΔTQU is cleared.

On the other hand, when it is judged at step 71 that T≤To, the routine proceeds to step 83 where it is judged if the amount of intake air G is larger than the limit amount of air Go. When G≤Go, the SOₓ trap catalyst 13 is raised in temperature, whereby the SOₓ trap rate can be made substantially 100%. Therefore, when G≤Go, the routine proceeds to step 84 where the output torque of the engine is gradually increased.

That is, first, at step 84, the torque increase correction amount ΔTQU is increased by a constant value β Next, at step 85, the required torque TQ calculated at step 70 is increased by the torque increase correction amount ΔTQU and the result is made the final required torque of the engine TQe (=TQ+ΔTQU). Next, at step 86, fuel injection is controlled so that this final required torque TQe is obtained.

Next, at step 87, the electric motor 27 is made to operate as a generator, and the torque increase correction amount ΔTQU is consumed for generating power. Next, at step 88, the torque decrease correction amount ΔTQD is cleared.

As opposed to this, when it is judged at step 83 that G>Go, even if adjusting the output torque of the engine, the SOₓ trap rate cannot be raised to substantially 100%. Therefore, at this time, the routine proceeds to step 89 where the engine is stopped. Next, at step 90, the required torque TQ calculated at step 70 is made the output torque TQm of the electric motor 27 for driving the vehicle. Next, at step 91, the electric motor 27 is driven so as to generate the output torque TQm. At this time, the transmission 25 is set to the neutral position. Next, the routine proceeds to step 76.

Next, another embodiment of the electric power device will be explained with reference to FIG. 8.

If referring to FIG. 8, in this embodiment, electric power device comprises a pair of motor generators 100, 101 operating as an electric motor and generator and a planetary gear mechanism 102. This planetary gear mechanism 102 is provided with a sun gear 103, ring gear 104, planetary gear 105 arranged between the sun gear 103 and ring gear 104, and planetary carrier 106 carrying the planetary gear 105. The sun gear 103 is coupled with a shaft 107 of the motor/generator 101, while the planetary carrier 106 is coupled with an output shaft 111 of the internal combustion engine 1. Further, the ring gear 104 is on the one hand coupled with a shaft 108 of the motor/generator 100 and on the other hand is coupled with an output shaft 110 coupled to the drive wheels via a belt 109. Therefore, it is learned that when the ring gear 104 turns, the output shaft 110 is made to turn along with it.

Explanation of the detailed operation of this electric power device will be omitted, but generally speaking, the motor/generator 100 mainly operates as an electric motor, while the motor/generator 101 mainly operates as a generator.

That is, when driving the vehicle by only the output of the internal combustion engine 1, the rotation of the motor/generator 101 is stopped. At this time, when the output shaft 111 of the internal combustion engine 1 rotates, the ring gear 104 is made to rotate. If the ring gear 104 is made to rotate, the rotational force of the ring gear 104 is transmitted through the belt 109 to the output shaft 110 whereby the vehicle is driven. At this time, the motor/generator 100 is idling.

On the other hand, if driving the vehicle by only electric power, the operation of the internal combustion engine 1 is stopped and the vehicle is driven by the motor/generator 100. That is, if the motor/generator 100 is made to rotate, the ring gear 104 is made to rotate, the rotational power of the ring gear 104 is transmitted through the belt 109 to the output shaft 110, and thereby the vehicle is driven. On the other hand, at this time, the planetary carrier 106 is not rotating, so if the ring gear 104 rotates, the sun gear 103 is made to rotate. At this time, the motor/generator 101 is idling.

On the other hand, when superposing electric power on the drive power of the internal combustion engine, the motor/generator 100 is driven in addition to the internal combustion engine 1. At this time, the rotational force of the planetary carrier 106 is superposed on the rotational force of the ring gear 104. On the other hand, at this time, the motor/generator 101 acts to generate power.
- 5: exhaust manifold
- 13: SOₓ trap catalyst
- 14: NOₓ storage catalyst
- 25: transmission
- 27: electric motor

## Claims

1. A vehicle, comprising a compression ignition type internal combustion engine (1), an electric power device (27) and an exhaust purification device (12) for said internal combustion engine (1),
said exhaust purification device (12) arranging, in an engine exhaust passage, an SOₓ trap catalyst (13) able to trap SOₓ contained in exhaust gas, and, in the exhaust passage downstream of the SOₓ trap catalyst (13), an NOₓ storage catalyst (14) storing NOₓ contained in the exhaust gas when the air-fuel ratio of an inflowing exhaust gas is lean and releasing stored NOₓ when the air-fuel ratio of the inflowing exhaust gas becomes a stoichiometric air-fuel ratio or rich,
said electric power device (27) being able to generate vehicle drive power separate from the vehicle drive power from the engine (1) and able to generate electric power from the engine (1),
wherein the vehicle drive power from the engine (1) and the vehicle drive power from the electric power device (27) are adjusted so that a SOₓ trap rate of the SOₓ trap catalyst (13) is maintained at a predetermined high SOₓ trap rate.

2. The vehicle according to claim 1, wherein said SOₓ trap catalyst (13) has a property of the SOₓ trap rate falling when a temperature of the SOₓ trap catalyst (13) becomes less than a predetermined limit temperature, and when the temperature of the SOₓ trap catalyst (13) is less than said limit temperature, the vehicle drive power from the engine (1) and the vehicle drive power from the electric power device (27) are adjusted in accordance with whether the SOₓ trap rate becomes said predetermined high SOₓ trap rate when increasing the output torque of the engine (1).

3. The vehicle according to claim 2, wherein when the SOₓ trap rate becomes said predetermined high SOₓ trap rate when increasing the output torque of the engine (1), the output torque of the engine (1) is increased with respect to a required torque and an increase in the output torque is consumed for the power generation action of the electric power device (27).

4. The vehicle according to claim 2, wherein when the SOₓ trap rate will not become said predetermined high SOₓ trap rate when increasing the output torque of the engine (1), the engine (1) is stopped and the vehicle is driven by the electric power device (27).

5. The vehicle according to claim 2, wherein, when the amount of intake air is smaller than a predetermined limit amount of intake air, it is judged that the SOₓ trap rate becomes said predetermined high SOₓ trap rate when increasing the output torque of the engine (1) and, when the amount of the intake air is greater than the predetermined limit amount of intake air, it is judged that the SOₓ trap rate will not become said predetermined SOₓ trap rate when increasing the output torque of the engine (1).

6. The vehicle according to claim 1, wherein said SOₓ trap catalyst (13) has a property of the SOₓ trap rate falling when a temperature of said SOₓ trap catalyst (13) becomes less than a predetermined limit temperature, and when the temperature of the SOₓ trap catalyst (13) is higher than said limit temperature, the vehicle is driven by the engine (1) so long as the SOₓ trap rate does not fall due to a reason other than a drop of temperature of the SOₓ trap catalyst (13).

7. The vehicle according to claim 6, wherein when the temperature of the SOₓ trap catalyst (13) is higher than said limit temperature, if the amount of intake air becomes greater than a predetermined limit amount of air and the SOₓ trap rate falls, the output torque of the engine (1) is decreased from a required torque and the decrease of the output torque is made up for by vehicle drive power from the electric power device (27).

## Patentansprüche

1. Fahrzeug, aufweisend einen Verbrennungsmotor (1) mit Eigenzündung, eine elektrische Leistungsvorrichtung (27) und eine Abgasreinigungsvorrichtung (12) für den Verbrennungsmotor (1),
wobei in der Abgasreinigungsvorrichtung (12), in einer Motorabgasleitung, ein SOx-Abscheidungskatalysator (13) angeordnet ist, in dem das in dem Abgas enthaltene SOx abgeschieden werden kann, und, in der Abgasleitung stromabwärts des SOx-Abscheidungskatalysators (13), ein NOx-Speicherkatalysator (14) angeordnet ist, der das in dem Abgas enthaltene NOx speichert, wenn das Kraftstoff-Luftverhältnis eines einströmenden Abgases mager ist, und der das gespeicherte NOx freisetzt, wenn das Kraftstoff-Luftverhältnis des einströmenden Abgases ein stöchiometrisches Kraftstoff Luftverhältnis oder einen fetten Wert erreicht,
wobei die elektrische Leistungsvorrichtung (27) getrennt von der Fahrzeugantriebsleistung des Motors (1) eine Fahrzeugantriebsleistung erzeugen kann, und eine elektrische Leistung von dem Motor (1) erzeugen kann,
wobei die Fahrzeugantriebsleistung von dem Motor (1) und die Fahrzeugantriebsleistung von der elektrischen Leistungsvorrichtung (27) so eingestellt sind, dass eine SOx-Abscheidungsrate des SOₓ-Abscheidungskatalysators (13) auf einer vorbestimmten hohen SOx-Abscheidungsrate beibehalten wird.

2. Fahrzeug nach Anspruch 1, wobei der SOx-Abscheidungskatalysator (13) so beschaffen ist, dass die SOx-Abscheidungsrate abfällt, wenn eine Temperatur des SOx-Abscheidungskatalysators (13) eine vorbestimmte Grenztemperatur unterschreitet, und, wenn die Temperatur des SOx-Abscheidungskatalysators (13) die Grenztemperatur unterschreitet, die Fahrzeugantriebsleistung von dem Motor (1) und die Fahrzeugantriebsleistung von der elektrischen Leistungsvorrichtung (27) dementsprechend eingestellt werden, ob die SOx-Abscheidungsrate die vorbestimmte hohe SOx-Abscheidungsrate erreicht, wenn das Ausgangsdrehmoment des Motors (1) zunimmt.

3. Fahrzeug nach Anspruch 2, wobei, wenn die SOx-Abscheidungsrate die vorbestimmte hohe SOx-Abscheidungsrate erreicht, wenn das Ausgangsdrehmoment des Motors (1) zunimmt, das Ausgangsdrehmoment des Motors (1) in Bezug auf ein Soll-Drehmoment erhöht wird und ein Anstieg des Ausgangsdrehmoments für den Leistungserzeugungsvorgang der elektrischen Leistungsvorrichtung (27) verbraucht wird.

4. Fahrzeug nach Anspruch 2, wobei, wenn die SOx-Abscheidungsrate die vorbestimmte hohe SOx-Abscheidungsrate nicht erreicht, wenn das Ausgangsdrehmoment des Motors (1) erhöht wird, der Motor (1) abgeschaltet wird und das Fahrzeug durch die elektrische Leistungsvorrichtung (27) angetrieben wird.

5. Fahrzeug nach Anspruch 2, wobei, wenn die Saugluftmenge geringer als eine vorbestimmte Saugluft-Grenzmenge ist, beurteilt wird, dass die SOx-Abscheidungsrate die vorbestimmte hohe SOx-Abscheidungsrate erreicht, wenn das Ausgangsdrehmoment des Motors (1) ansteigt und, wenn die Saugluftmenge größer als die vorbestimmte Saugluft-Grenzmenge ist, beurteilt wird, dass die SOx-Abscheidungsrate die vorbestimmte SOx-Abscheidungsrate nicht erreichen wird, wenn das Ausgangsdrehmoment des Motors (1) zunimmt.

6. Fahrzeug nach Anspruch 1, wobei der SOx-Abscheidungskatalysator (13) so beschaffen ist, dass die SOx-Abscheidungsrate abfällt, wenn eine Temperatur des SOx-Abscheidungskatalysators (13) eine vorbestimmte Grenztemperatur unterschreitet, und, wenn die Temperatur des SOx-Abscheidungskatalysators (13) höher als die Grenztemperatur ist, das Fahrzeug durch den Motor (1) solange angetrieben wird, wie die SOx-Abscheidungsrate aus einem anderen Grund als einem Abfallen der Temperatur des SOx-Abscheidungskatalysators (13) nicht abfällt.

7. Fahrzeug nach Anspruch 6, wobei, wenn die Temperatur des SOx-Abscheidungskatalysators (13) höher ist als die Grenztemperatur, wenn die Saugluftmenge größer wird als eine vorbestimmte Saugluftmenge, und die SOx-Abscheidungsrate abfällt, das Ausgangsdrehmoment des Motors (1) von einem Soll-Drehmoment abnimmt und die Abnahme des Ausgangsdrehmoments durch die Fahrzeugantriebsleistung von der elektrischen Leistungsvorrichtung (27) ausgeglichen wird.

## Revendications

1. Véhicule, comprenant un moteur à combustion interne (1) du type à allumage par compression, un dispositif (27) à énergie électrique et un dispositif (12) de purification d'échappement pour ledit moteur à combustion interne (1),
ledit dispositif (12) de purification d'échappement agençant, dans un conduit d'échappement de moteur, un catalyseur (13) de piégeage de SOₓ capable de piéger du SOₓ contenu dans le gaz d'échappement, et, dans le conduit d'échappement en aval du catalyseur (13) de piégeage de SOₓ, un catalyseur (14) d'emmagasinage de NOₓ emmagasinant du NOₓ contenu dans le gaz d'échappement lorsque le rapport air-carburant d'un gaz d'échappement entrant est pauvre et libérant du NOₓ emmagasiné lorsque le rapport air-carburant du gaz d'échappement entrant devient un rapport air-carburant stoechiométrique ou riche,
ledit dispositif (27) à énergie électrique étant capable d'engendrer de l'énergie d'entraînement de véhicule distincte de l'énergie d'entraînement de véhicule provenant du moteur (1) et capable d'engendrer de l'énergie électrique à partir du moteur (1),
dans lequel l'énergie d'entraînement de véhicule provenant du moteur (1) et l'énergie d'entraînement de véhicule provenant du dispositif (27) à énergie électrique sont ajustées de façon que le taux de piégeage de SOₓ du catalyseur (13) de piégeage de SOₓ soit maintenu à un taux élevé prédéterminé de piégeage de SOₓ.

2. Véhicule selon la revendication 1, dans lequel ledit catalyseur (13) de piégeage de SOₓ a la propriété que le taux de piégeage de SOₓ chute lorsque la température du catalyseur (13) de piégeage de SOₓ devient inférieure à une température limite prédéterminée, et dans lequel, lorsque la température du catalyseur (13) de piégeage de SOₓ est inférieure à ladite température limite, l'énergie d'entraînement de véhicule provenant du moteur (1) et l'énergie d'entraînement de véhicule provenant du dispositif (27) à énergie électrique sont ajustées en fonction de ce que le taux de piégeage de SOₓ devient ou non ledit
taux élevé prédéterminé de piégeage de SOₓ lors de l'accroissement du couple de sortie du moteur (1).

3. Véhicule selon la revendication 2, dans lequel, lorsque le taux de piégeage de SOₓ devient ledit taux élevé prédéterminé de piégeage de SOₓ lors de l'accroissement du couple de sortie du moteur (1), le couple de sortie du moteur (1) augmente par rapport au couple nécessaire et l'augmentation du couple de sortie est consommée pour l'action de génération d'énergie du dispositif (27) à énergie électrique.

4. Véhicule selon la revendication 2, dans lequel, lorsque le taux de piégeage de SOₓ ne deviendra pas ledit taux élevé prédéterminé de piégeage de SOₓ lors de l'accroissement du couple de sortie du moteur (1), le moteur (1) est arrêté et le véhicule est entraîné par le dispositif (27) à énergie électrique.

5. Véhicule selon la revendication 2, dans lequel, lorsque la quantité d'air d'admission est plus petite qu'une quantité limite prédéterminée d'air d'admission, on juge que le taux de piégeage de SOₓ devient ledit taux élevé prédéterminé de piégeage de SOₓ lors de l'accroissement du couple de sortie du moteur (1) et, lorsque la quantité d'air d'admission est plus grande que la quantité limite prédéterminée d'air d'admission, on juge que le taux de piégeage de SOₓ ne deviendra pas ledit taux prédéterminé de piégeage de SOₓ lors de l'augmentation du couple de sortie du moteur (1).

6. Véhicule selon la revendication 1, dans lequel ledit catalyseur (13) de piégeage de SOₓ a la propriété que le taux de piégeage de SOₓ chute lorsque la température dudit catalyseur (13) de piégeage de SOₓ devient inférieure à une température limite prédéterminée, et dans lequel, lorsque la température du catalyseur (13) de piégeage de SOₓ est supérieure à ladite température limite, le véhicule est entraîné par le moteur (1) aussi longtemps que le taux de piégeage de SOₓ ne chute pas pour une autre raison qu'une chute de température du catalyseur (13) de piégeage de SOₓ.

7. Véhicule selon la revendication 6, dans lequel, lorsque la température du catalyseur (13) de piégeage de SOₓ est plus élevée que ladite température limite, si la quantité d'air d'admission devient plus grande qu'une quantité limite prédéterminée d'air et si le taux de piégeage de SOₓ chute, le couple de sortie du moteur (1) est réduit par rapport au couple nécessaire et la diminution du couple de sortie est compensée par de l'énergie d'entraînement de véhicule provenant du dispositif (27) à énergie électrique.
